# EUROPEAN PATENT APPLICATION

(11) **EP 4 644 236 A1**
(43) Date of publication of application: **05.11.2025**
(21) Application number: 24275059.4
(22) Date of filing: 03.05.2024
(51) Int. Cl.: B64C 13/04, B64C 13/50, B64D 31/04

(54) **ACTIVE LINEAR THROTTLE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to a method for controlling an active linear throttle assembly. The method comprises receiving (1002) parameter data from a parameter sensing mechanism for a linearly moveable grip; predicting (1004) expected control data based on a haptic feedback model; and outputting (1006) control data based on the expected control data and actual control data to control an actuator.

## Description

### FIELD

The present invention relates to active linear throttles for vehicles and in particular, aircrafts (e.g. rotary, fixed or blend).

### BACKGROUND

With the advent of fly by wire technologies, the direct mechanical connection between the throttle of an aircraft and the engines was replaced by an electrical connection, with the engines being controlled based on a sensed position of the throttle (e.g. of the throttle lever or of the moveable grip). The advent of active throttles has allowed tactile cueing to be utilised to reduce the workload of the pilot when flying in demanding situations. Active throttles have been developed to provide this haptic feedback to the pilot. An active throttle assembly includes one or more actuators which can be driven by a control signal (e.g. based on actual aircraft conditions) to provide haptic feedback to the pilot.

### SUMMARY

According to an aspect of the present invention, there is provided a method for controlling an active linear throttle assembly. The method comprises receiving parameter data from a parameter sensing mechanism for a linearly moveable grip, predicting expected control data based on a haptic feedback model, and outputting control data based on the expected control data and actual control data to control an actuator. The predicting the expected control data may comprise determining, for the linearly moveable grip, one or more parameter demands from the haptic feedback model, wherein the haptic feedback model is based on pilot applied force and one or more haptic feedback parameters of a flight control system. A feedforward loop is provided to aid the pilot in controlling of the aircraft.

Optionally, the method comprises determining the pilot applied force from the received parameter data.

Optionally, the method comprises comparing the expected control data and the actual control data; and generating corrective data from the compared expected control data and actual control data, wherein the control data is based on the corrective data.

Optionally, the method comprises generating a motor torque for cancelling the pilot applied force.

Optionally, the method comprises estimating a motor torque constant, and outputting the control data based on the estimated motor torque constant.

Optionally, the method comprises storing the received parameter data and the control data as a profile.

Optionally, the method comprises predicting one or more parameter demands for the active linear throttle assembly based on the parameter data from the parameter sensing mechanism and one or more haptic feedback parameters of a flight control system, determining an error in the active linear throttle assembly by comparing the control data with the one or more parameter demands, and updating the control data. A feedback loop is provided to ensure that correct parameters for the control of the active linear throttle assembly are implemented. This creates a more robust system that aids the pilot to control the throttle at optimal level for an operational state for the aircraft.

Optionally, the method comprises determining a linear movement caused by the linearly moveable grip from the received parameter data.

Optionally, the method comprises determining a linear movement within a linear actuator mechanism of the active linear throttle assembly.

The receiving parameter data may comprise receiving parameter data from one or more of: a position detector, a velocity detector and/or a force detector. Optionally, the method comprises receiving parameter data of the linearly moveable grip from the parameter sensing mechanism located on the linearly moveable grip and/or located in a proximity of the linearly moveable grip. This enables more accurate detection of the force applied to the linearly moveable grip, such as the pilot's applied force).

Optionally, the method comprises receiving parameter data of the linear actuator mechanism from the parameter sensing mechanism located on the linear actuator mechanism and/or located in a proximity of the linear actuator mechanism. This enables more accurate detection of the parameter (such as force/torque and position) applied to the linear actuator mechanism.

Optionally, the method comprises receiving parameter data of the actuator from the parameter sensing mechanism located in a proximity of the actuator. The actuator may be a rotary motor. This enables more accurate detection of the parameter (such as force/torque and position) applied to the actuator. Depending on the need of the system, a selection of parameter sensing mechanism can be used and placed at a particular location.

Optionally, the method comprises controlling a linear actuator mechanism, wherein the linear actuator mechanism comprises one of: a mechanical linkage, a linear motor, a toothed belt, a cable drive, a ball screw and/or a lead screw. Various implementations of the linear actuator mechanism are available depending on the available space within dedicated to throttle device on a vehicle (e.g., aircraft). This enables flexibility in the design of the throttle for the aircraft.

According to a further aspect of the present invention, there is provided a controller configured to receive parameter data from a parameter sensing mechanism for a linearly moveable grip, predict expected control data based on a haptic feedback model; and output control data based on the expected control data and actual control data to control the actuator.

Optionally, the controller is configured to determine, for the linearly moveable grip, one or more parameter demands from the haptic feedback model, wherein the haptic feedback model is based on pilot applied force and one or more haptic feedback parameters of a flight control system.

Optionally, the controller is configured to determine the pilot applied force from the received parameter data.

Optionally, the controller is configured to compare the expected control data and the actual control data, and generate corrective data from the compared expected control data and actual control data, wherein the control data is based on the corrective data.

Optionally, the controller is configured to predict one or more parameter demands for the active linear throttle assembly based on the parameter data from the parameter sensing mechanism and one or more haptic feedback parameters of a flight control system, determine an error in the active linear throttle assembly by comparing the control data with the one or more parameter demands, and updating the control data.

Optionally, the controller is configured to determine a linear movement caused by the linearly moveable grip from the received parameter data and determine a linear movement within a linear actuator mechanism of the active linear throttle assembly.

Optionally, the controller is configured to control a linear actuator mechanism, wherein the linear actuator mechanism comprises one of: a mechanical linkage, a linear motor, a toothed belt, a cable drive, a ball screw and/or a lead screw.

According to another aspect of the present invention, there is provided an active linear throttle assembly comprising the controller described herein; a parameter sensing mechanism for determining parameter data for a linearly moveable grip; an actuator for driving an engine; and a linear actuator mechanism arranged to connect the linearly moveable grip with the actuator.

Optionally, the parameter sensing mechanism comprises one or more of: a position detector, a velocity detector and/or a force detector.

Optionally, the parameter sensing mechanism is located on the linearly moveable grip or located in a proximity of the linearly moveable grip.

Optionally, the parameter sensing mechanism is located on the linear actuator mechanism and/or located in a proximity of the linear actuator mechanism.

Optionally, the parameter sensing mechanism is located in a proximity of the actuator. The actuator may be a rotary motor.

According to yet another aspect of the present invention, there is provided a vehicle comprising the active linear throttle assembly described herein.

According to yet another aspect of the present invention, there is provided a computer program comprising instructions which, when the program is executed by a computer, cause the computer to carry out any of the methods described herein. The computer program may be stored on a computer-readable medium.

### BRIEF DESCRIPTION OF THE FIGURES

Embodiments of the invention will now be described by way of example only with reference to the figures, in which:
Figure 1 is a schematic diagram of a first example aircraft system;
Figure 2 is a schematic diagram of a second example aircraft system;
Figure 3 is a schematic diagram of a third example aircraft system;
Figures 4-7 are schematic diagrams of different active linear throttle assembly arrangements;
Figure 8 shows an example data flow for controlling an active linear throttle assembly;
Figure 9 shows an example method for controlling an active linear throttle assembly;
Figure 10 shows an example method for controlling an active linear throttle assembly with a feedforward loop;
Figure 11 is a schematic diagram of a computing device 1100 that is configured to implement the methods for controlling an active linear throttle assembly as shown in Figures 9 and 10; and
Figure 12 shows an example of a vehicle on which the active linear throttle assembly is mounted.

### DETAILED DESCRIPTION

As described above, active linear throttles have been developed to provide haptic feedback to the pilot. This active feedback may be indicative of actual aircraft conditions but also may provide other feedback to pilots, e.g. in the form of soft stops (e.g. so that the pilot has to exert additional force to override a soft stop), gradients, gates, etc. Active linear throttles differ from auto-throttles (also referred to as back-driven throttles) which include an actuator but only provide simple feedback of the current throttle setting, e.g. by moving the throttle to reflect operation of the auto-pilot when engaged.

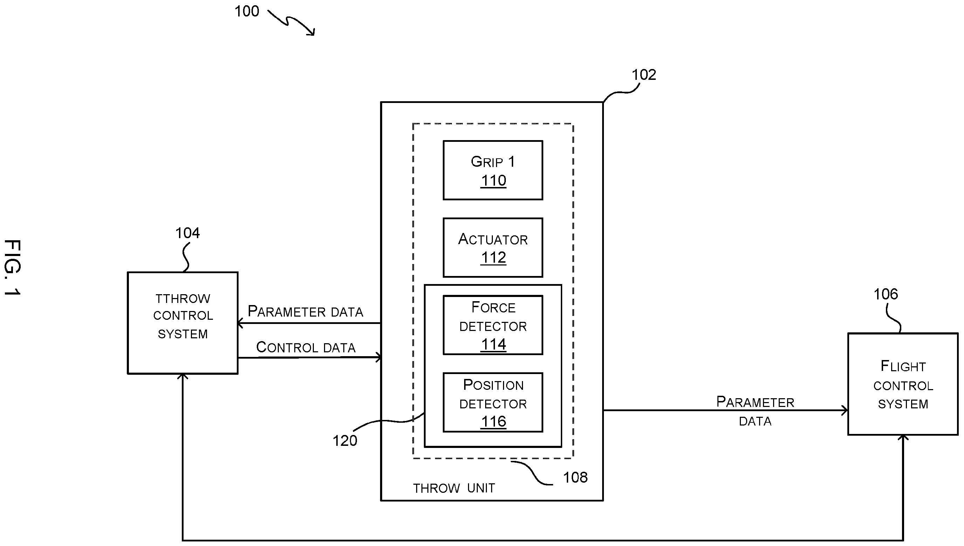

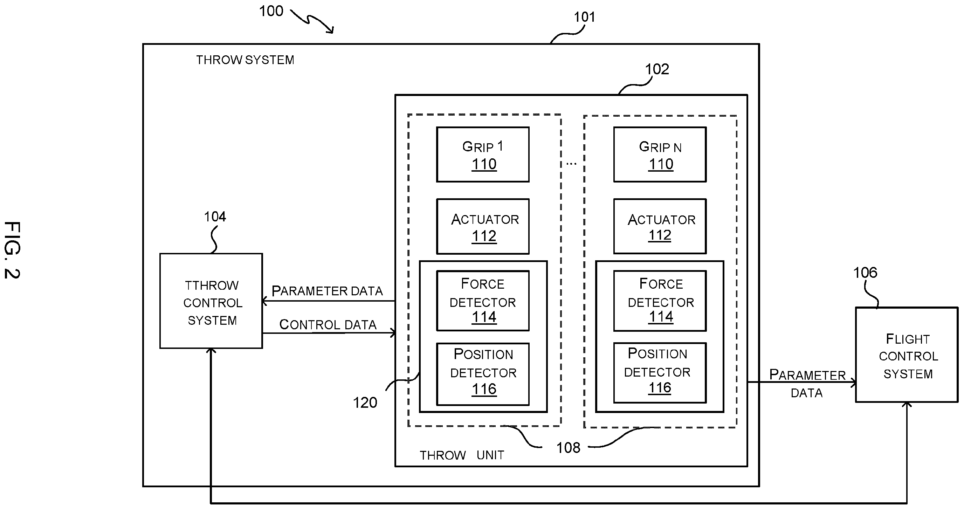

Described herein are a plurality of active linear throttle assembly arrangements that are configured to more accurately and/or reliably sense the force applied by a pilot to a throttle through the selection of sensor type (e.g. force or torque sensor) and/or positioning of the sensor. In various examples described herein, the length of any dynamic wires that connect to the force/torque sensor (e.g., force detector) is reduced or the use of a dynamic wire is avoided, thereby improving the overall reliability of the active linear throttle assembly. In various examples described herein, the overall part count is reduced which in turn reduces the manufacturing complexity and may also reduce the overall weight of the assembly. The active linear throttle assembly arrangements described herein may be used in a single-throw (i.e. single throttle linearly moveable grip) active linear throttle assembly as shown in Figure 1 or in a multi-throw active linear throttle assembly (i.e. comprising multiple throttle linearly moveable grips) as shown in Figure 2. In most cases, the active linear throttle assembly arrangements described herein are used in a single or double throw active linear throttle assembly (also can be referred to as a single axis active linear throttle assembly or a double axes active linear throttle assembly).

Also described herein is a control system for a multi-throw active throttle assembly that improves the fidelity of the system and the visual feedback to the pilot. This control system may be used in combination with any of the plurality of active linear throttle assembly arrangements described herein or may be used independently (e.g. with any other multi-throw active linear throttle assembly).

The active linear throttle assembly arrangements and the control system described herein may be used for single/independent pilot operation (e.g. as shown in the example system of Figure 1) and also in systems where the controls of the pilot and co-pilot are linked, e.g. systems where movement of the throttle by the pilot results in the co-pilot's throttle moving so that the throttle throws (i.e. linearly moveable grips) are at the same position (e.g. at the same angular position) for both the pilot and the co-pilot (e.g. as shown in the example system of Figure 2).

Figure 1 is a schematic diagram of a system 100 comprising a throttle unit 102 and a control system 104) and a flight control system 106. It will be appreciated that the system 100 shown in Figure 1 only shows a part of an overall aircraft system. Furthermore, it will be appreciated that whilst Figure 1 shows a single flight control system 106, there may be more than one (e.g. for redundancy). The throw unit 102, which may also be referred to as a throttle unit, comprises an active linear throttle assembly 108 comprises a linearly moveable grip (also referred to as a throttle or engine throttle or thrust grip) 110, a parameter sensing mechanism 120 and an actuator 112, The parameter sensing mechanism 120 comprises a force and/or torque detector 114 and a position detector 116. An active linear throttle assembly 108 may comprise one or more controllers. It will be appreciated that an active linear throttle assembly 108 may comprise other elements in addition to those shown in Figure 1. Whilst the active linear throttle assembly 108 is shown as comprising a single actuator 112, a single force/torque detector 114 and a single position detector 116, it will be appreciated that there may one or more of each (e.g. to provide redundancy in the case of failure of one of these elements). The force/torque detector 114 is arranged to detect force/torque applied to the linearly moveable grip and the position detector 116 is arranged to detect the position (e.g. the linear position, the angular position) of the linearly moveable grip 110.

The actuator 112 may comprise any combination of: DC motor, brushless DC motor, servo actuator, linear motor, planetary gearbox, harmonic drive gearbox, multi-phase resolver, Hall effect sensor, etc.

As shown in Figure 1, the throw unit 102 outputs parameter data P to both the control system 104 and the flight control system 106. The flight control system 106 uses these inputs (along with other inputs in some implementations) to control the aircraft engines (not shown). The parameter data P comprises one or more of: force, torque, acceleration and/or position data determined by the parameter sensing mechanism 120. The control system 104 uses these inputs to control the actuators 112 (e.g. to determine what haptic feedback to provide via the linearly moveable grip 110) and outputs control data C to the throw unit 102 which provides control signals for the actuator 112. As shown in Figure 1, the control system 104 may also communicate with the flight control system 106, e.g. to receive additional data (e.g. control characteristic data) that is then used to determine the haptic feedback required and hence generate the control data C that is output to the throw unit 102 to control the actuators 112. As described in more detail below, haptic feedback models may be stored and used to determine the control signals to generate based on the inputs received by the control system 104. The control characteristic data that is received from the flight control system 106 may, for example, define aspects of the model that the linearly moveable grip 110 is following (e.g. one or more of: positions of stops, forces required to overcome any stops, spring gradients, damping terms, etc.). The system 100 forms a part of a throw system of a vehicle (e.g., an aircraft).

Figure 2 is a schematic diagram of a system 100 comprising throw system 101 (comprising a throw unit 102 and a throw control system 104) and a flight control system 106. It will be appreciated that the system 100 shown in Figure 2 only shows a part of an overall aircraft system. Furthermore, it will be appreciated that whilst Figure 2 shows a single flight control system 106, there may be more than one (e.g. for redundancy). The throw unit 102, which may also be referred to as a throttle unit, comprises one or more active linear throttle assemblies 108 (e.g. n active linear throttle assemblies, where n is an integer greater than or equal to one), one for each linearly moveable grip 110. Each active linear throttle assembly 108 comprises a linearly moveable grip (also referred to as a throttle or an engine throttle or thrust grip) 110, a parameter sensing mechanism 120 and an actuator 112, The parameter sensing mechanism 120 comprises one or more of: a force/torque detector 114, a velocity detector, an acceleration detector and/or a position detector 116. Each active linear throttle assembly 108 may comprise one or more controllers. It will be appreciated that an active linear throttle assembly 108 may comprise other elements in addition to those shown in Figure 1 and whilst each active linear throttle assembly 108 is shown as comprising a single actuator 112, a single force/ torque detector 114 and a single position detector 116, it will be appreciated that there may one or more of each (e.g. to provide redundancy in the case of failure of one of these elements). The force/torque detector 114 is arranged to detect force/torque applied to the linearly moveable grip and the position detector 116 is arranged to detect the position (e.g. the linear position, the angular position) of the linearly moveable grip 110.

The actuator 112 may comprise any combination of: DC motor, brushless DC motor, servo actuator, linear motor, planetary gearbox, harmonic drive gearbox, multi-phase resolver, Hall effect sensor, etc.

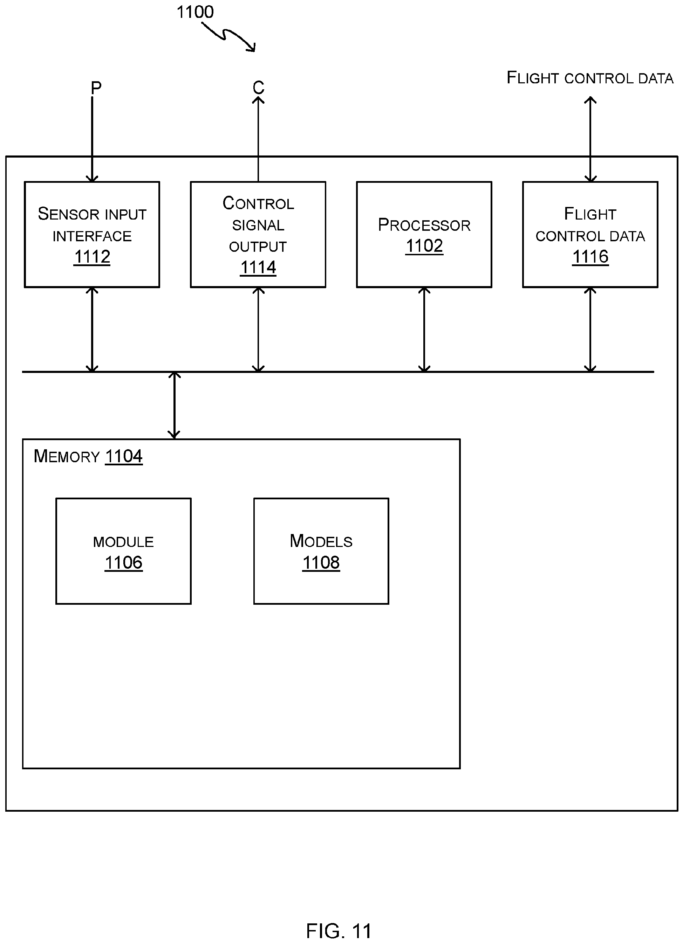

As shown in Figure 1, the throw unit 102 outputs parameter data P (for each of the active linear throttle assemblies 108) to both the throw control system 104 and the flight control system 106. The parameter data P may comprise one or more of: force, torque, velocity, acceleration and/or position data. The flight control system 106 uses these inputs (along with other inputs in some implementations) to control the aircraft engines (not shown). The throw control system 104 uses these inputs to control the actuators 112 (e.g. to determine what haptic feedback to provide via each linearly moveable grip 110) and outputs control data C to the throw unit 102 which provides control signals for each of the actuators 112. As shown in Figure 2, the throw control system 104 may also communicate with the flight control system 106, e.g. to receive additional data (e.g. control characteristic data) that is then used to determine the haptic feedback required and hence generate the control data C that is output to the throw unit 102 to control the actuators 112. As described in more detail below, haptic feedback models (1108 shown in Figure 11) may be stored and used to determine the control signals to generate based on the inputs received by the throw control system 104. The control characteristic data that is received from the flight control system 106 may, for example, define aspects of the model that the linearly moveable grip is following (e.g. one or more of: positions of stops, forces required to overcome any stops, spring gradients, damping terms, etc.).

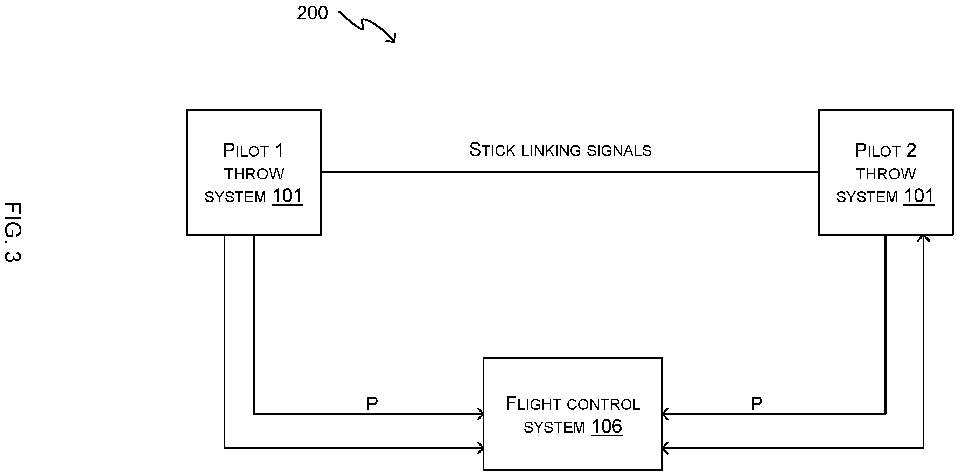

The system 100 of Figure 2 comprises only a single throw system 101 (and hence a single throw unit 102). This may, for example, be used in a single pilot aircraft or it may be positioned within the cockpit between the pilot and co-pilot so that both the pilot and the co-pilot can reach and operate the linearly moveable grips 110 of the active linear throttle assemblies 108. Figure 3 shows an alternative system 200 which comprises separate throw systems 101 for each of the pilot and the co-pilot (labelled pilot 1 and pilot 2 throw systems in this example). The throw units 102 within each of these throw systems 101 may be positioned in outboard locations within the cockpit. Each of the throw systems 101 provides force and/or position data to the flight control system 106 (or to each of the flight control systems 106 where there are more than one).

In this system 200, the two throw systems 101 are linked. In the example shown in Figure 3 they are linked electrically, rather than mechanically, with stick linking signals being communicated between the throw systems 101. These stick linking signals provide control data that keeps the positions of the corresponding linearly moveable grips 110 in each of the two throw units 102 aligned (it keeps linearly moveable grip 1 in the throw unit in pilot 1 throw system aligned with linearly moveable grip 1 in the throw unit in pilot 2 throw system, linearly moveable grip 2 in the throw unit in pilot 1 throw system aligned with linearly moveable grip 2 in the throw unit in pilot 2 throw system, etc). In other examples, the two throw systems 101 may be linked mechanically.

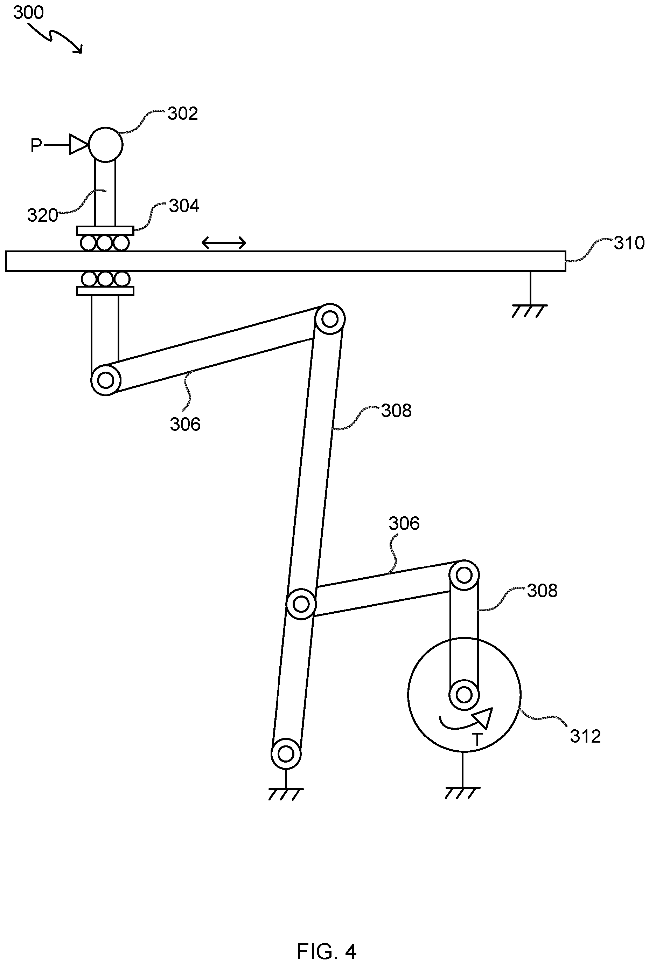

Figures 4-7 show three different active linear throttle assembly arrangements, having different types of linear actuator mechanisms. Each of these arrangements may be implemented as the active linear throttle assembly 108 in either of the systems described above and shown in Figures 1 to 3. Each of these active linear throttle assembly arrangements improve the accuracy and/or reliability of the detection of the force applied by the pilot to the linearly moveable grip compared to existing active throttle assemblies. Whilst Figures 4-7 each show a single active linear throttle assembly, multiple assemblies (e.g. multiple identical assemblies) may be implemented within a throw unit (e.g. as in Figure 2). The active linear throttle assembly arrangements shown Figures 4-7 may comprise other elements that are not shown in the drawings, for example, a parameter sensing mechanism such as a position detector 116, a velocity detector, acceleration detector, additional actuators, etc.

Figure 4 shows an example of active linear throttle assembly comprising a mechanical linkage 300. The mechanical linkage is arranged to convert determined linear movement into rotary movement. The mechanical linkage comprises one or more links 306 and one or more cranks 308. Each of the one or more links 306 are connected to the one or more cranks 308, such that the linear movement caused by the linearly moveable grip 310 located at a first end of the mechanical linkage is converted to rotary movement by a rotary actuator located at a second end of the mechanical linkage. In some embodiments, the parameter data P is configured to be determined when the grip 310 located on a slider 340 is moved along a guide 330. The parameter data P comprises force data depending on the force applied to the grip 310 and position data depending on the position of the grip 310 relative to its default position or its previous position or the length of the guide 330. The guide 330 is arranged to aid the linear movement of the linearly moveable grip 310 along its length. The length of the guide may correspond to the width of a throttle assembly box. The throttle assembly box may refer to a casing of the throw unit 102 indicated in Figures 1 and 2.

This arrangement allows linear to rotary conversion. Such a linear actuator mechanism can use a traditional rotary motor whilst providing a lower inertia of the total active linear throttle assembly and lower backdrive force. The motor 312 in Figure 4 is in its simplest form but the motor 312 is capable of driving the width of the throttle assembly box. An alternative design (not shown in figures) may be using a 90 degree gearhead to rotate the motor 312 into free space along the length of the throttle assembly box. This reduces the width of the throttle assembly box. Torque T is exerted at the motor 312.

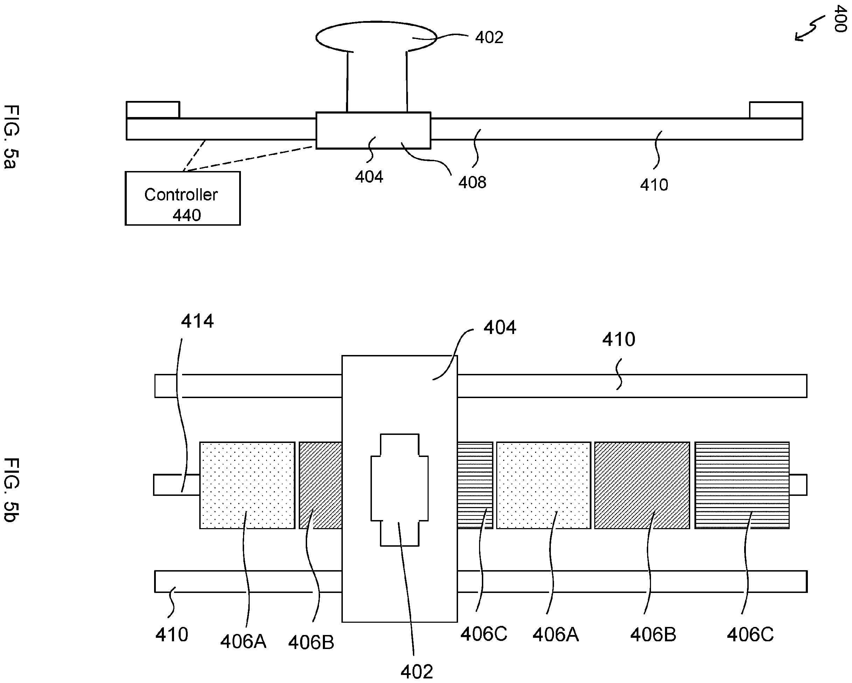

Figures 5a and 5b show an example of active linear throttle assembly comprising a linear motor. In this example, a linear motor 408 is arranged to convert determined linear movement into rotary movement. This arrangement provides a simple solution. The linear motor 408 comprises a linearly extending track 410 and a carriage 404. A grip 402 (i.e. a linearly moveable grip) is affixed to the carriage 404. The linearly extending track 410 can also be referred to as linearly extending rail or a linearly extending guide. Combined the linearly extending track 410 and the carriage 404 form the linear motor 408 in that when current or voltage is provided to one of the linearly extending track 410 or the carriage 404 the carriage 404 moves with respect to the linearly extending track 410 due to an electromagnetic force of the linear motor 408. In this respect the linearly extending track 410 can be considered an unwound stator and the carriage 404 can be considered an unwound rotor. The linear motor 408 may be one of: a linear DC brushless motor, a linear induction motor, a tubular linear motor, a homopolar linear motor, a brushed linear motor.

The active linear throttle assembly 400 comprises a controller 440 (as shown in Fig 5a) configured to control a current or voltage provided by a power supply to at least one of the linearly extending track or the carriage in order to control movement of the carriage 404 with respect to the linearly extending track 410; and a parameter sensing mechanism. In other words, the controller 440 is configured to control a current or voltage being provided to the linear motor 408 in order to control motion of the linear motor 408. The current or voltage can be provided by a power supply (not shown) which in some examples may form part of the linear throttle assembly 400 but in other examples may be separate from the linear throttle assembly 400 and may, for example, form part of an aircraft of other vehicle in which the linear throttle assembly 400 is used or mounted. The controller 440 may be a part of the throw control system shown in Figure 1.

The grip 402 is mounted to a carriage 404 wherein the grip 402 and carriage 404 move together. The carriage 404 can also be referred to as a mount, support or base. In some examples the grip 402 may be directly mounted to the carriage 404. In other examples, the grip 402 may be indirectly mounted to the carriage 404 via another component of the active throttle assembly 400. However, in either case, the grip is fixedly mounted to the carriage 404 so that the grip 402 moves with the carriage 404. The parameter data comprises force data depending on the force applied to the grip 402 and position data depending on the position of the grip 402 relative to its default position or its previous position or the length of the linearly extending track 410. Figure 5b shows the active linear throttle assembly comprising a linear motor wherein the linear motor is an induction motor or a linear DC brushless motor. In this arrangement, a stator of the linear motor is unwound and forms the linearly extending track 410. In Figure 5b the stator or linearly extending track 410 of the linear motor comprises a plurality or electromagnetic coils 406A, 406B, 406C. The plurality of electromagnetic coils 406A, 406B, 406C is arranged in groups of n electromagnetic coils, wherein n is the number of phases of the linear induction motor or linear DC brushless motor. In an alternative arrangement for the induction motor or the linear DC brushless motor, the carriage 404 comprises a plurality of electromagnetic coils and the linearly extend track 410 comprises a plurality of permanent magnets. In both arrangements, the linear induction motor or linear DC brushless motor is configured to work with n phases of power where n is at least 2 and the number of groups is at least 1. In some examples, n may be at least 3. There can be any suitable number of coils per group and there can be any suitable number of groups. In Figure 5b, the linear induction motor or linear DC brushless motor is shown as being configured to work with 3 phases of power. However, the skilled person would understand that this is purely exemplary and more phases of power could be used if needed. In some examples, where three phase power is used, the power for the three phases of power can be supplied by a three-phase AC power source or power supply. However, in other examples, the power supply to the linear throttle assembly can comprise a DC power supply and the active throttle assembly can comprise a converter (not shown) configured to convert the DC power to the necessary phases of AC power required for the linear induction motor or linear DC brushless motor. When n is greater than or less than 3, this enables the linear induction motor or linear DC brushless motor to be provided with the required phases of power.

As mentioned above, the converter converts DC power into n phases of AC power. In some examples to make this conversion easy, the resultant AC power can have a trapezoidal waveform. However, in other examples, the waveform can be made sinusoidal in order to reduce any ripple in the force/torque output by the linear motor 408. This can provide improved and clearer haptic feedback.

When the linearly extending track 410 comprises a plurality of electromagnetic coils 406A, 406B, 406C arranged in groups of n coils, then the controller (not shown in Figure 5b) is configured to cause a power supply to provide power of an i^{th} phase to an i^{th} electromagnetic coil in each group of n magnetic coils wherein i goes from 1 to n. The times at which power is supplied to each coil can be controlled to cause movement of the carriage 404 with respect to the linearly extending track 410. The controller controls the movement of the carriage 404 to provide the required haptic feedback to the user or pilot.

In order to ensure the carriage 404 moves with respect to the linear extending track 410 when the linear motor is a linear induction motor, the carriage 404 can comprise a ferromagnetic or paramagnetic engagement portion which engages with the linearly extending track 410. In some examples when a linear DC brushless motor is used, the carriage 404 may comprise one or more permanent magnets to further enhance movement of the carriage 404 with respect to the linearly extending track 410.

The use of a linear induction motor or linear DC brushless motor as described with respect to Figure 5b provides a simple and effective linear motor that can be used to provide haptic feedback to linear throttle assembly 400. The use of a linear induction motor or linear DC brushless motor reduces the wear and tear of motors such as brushed motors and also allows easier control of movement of the linear motor than, for example, tubular linear motors.

The electromagnetic coils 406A, 406B, 406C are parallel to the linear extending track 410. This enables simple install and provides a linear motor with high torque sensitivity. In other examples, the electromagnetic coils 406A, 406B, 406C may instead be skewed with respect to the linearly extending track 410. The skew can be of any suitable angle to the vertical (e.g. a direction perpendicular to the linearly extending track 410). The angle provides a good trade-off between reducing the cogging of parallel electromagnetic coils 406A, 406B, 406C and reduced torque sensitivity of skewed electromagnetic coils 406A, 406B, 406C.

In Figure 5b an optional feature of a linear guide 414 is shown. When a linear induction motor or linear DC brushless motor is used, the carriage 404 may not contact the linearly extending track 410. The carriage 404 may thus be slidably mounted on the linear guide 414 to provide support for the carriage 404 e.g. to provide support for the weight of the carriage 404. The linear guide 414 extends parallel to the linearly extending track 410. There may be more than one linear guide to improve support for the carriage 404.

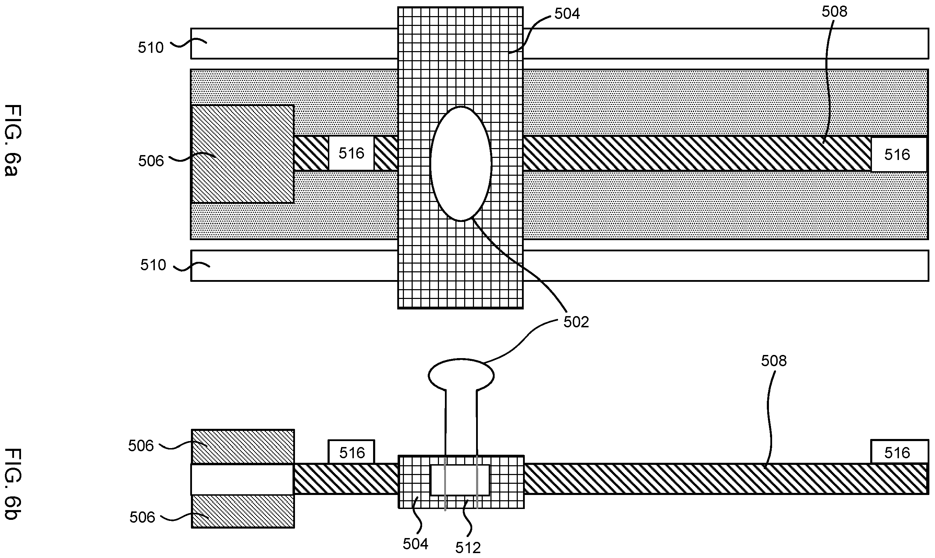

Figures 6a and 6b show an example of active linear throttle assembly comprising a ball screw and/or a lead screw. In this example, a screw 508 is arranged to convert determined linear movement into rotary movement. This arrangement is more cost effective when compared with the active linear throttle assembly comprising the linear motor. The active throttle assembly comprises a grip 502 which is moveable linearly, a mount 504 to which the grip 502 is attached, a rotary actuator 506, and a connector arranged to connect the rotary actuator 506 to the mount 504. The mount 504 and the grip 502 are moveable together. The mount 504 is attached to the linearly moveable portion, The mount 504 and the grip 502 are moveable along a linear guide 510. Figure 6a illustrates a pair of linear rails 510 as the linear guide 510, but it is appreciated that the linear guide 510 could be any other suitable form of linear guide. The mount 504 may be supported by a linear rail and linear bearings to provide a smooth motion to the pilot. Although a linear guide is shown in Figures 6a and 6b, the linear guide 510 is optional and in addition or as an alternative the mount 504 is mounted onto a screw nut 512. Screw 508 may be a ball screw, a lead screw, or any other suitable type of screw. In some examples screw 508 is a ball screw and the screw nut 512 is a ball screw nut. In other examples screw 508 is a ball screw and the screw nut 512 is a ball screw nut. Screw 508 is connected to rotary actuator 506. Rotational movement of rotary actuator 506 causes rotational movement of screw 508. Connected to screw 508 is screw nut 512 shown in Figure 6b. If the screw is a ball screw then the screw nut is a ball screw nut, and if the screw is a lead screw then the screw nut is a lead screw nut. Rotational movement of screw 508 leads to linear movement of screw nut 512. The screw nut 512 is attached to the mount 504 such that when the screw nut moves linearly, the mount and grip move linearly correspondingly.

The connector comprising the screw 508 and the screw nut 512 means that rotational movement of rotary actuator 506 causes linear movement of mount 504 and grip 502. The screw and screw nut are also means of converting linear grip movement to rotary actuation of the rotary actuator. Using a screw and screw nut to connect the mount to the rotary actuator allows for additional gearing. The rotary actuator 506 is configured to control, via the connector, a position of the grip 502. The rotary actuator 506 is configured to move rotationally in response to a control signal. At least one parameter sensing mechanism 120 is arranged to measure at least one of a parameter data associated with the grip 502.

The parameter data comprises force data depending on the force applied to the grip 502 and position data depending on the position of the grip 502 relative to its default position or its previous position or the length of the linear guide 510.

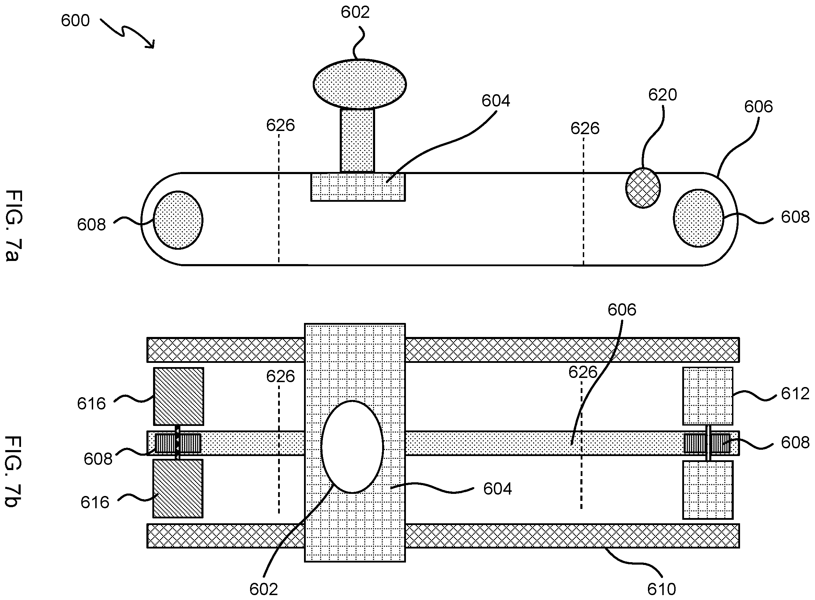

Figure 7a and 7b show an example of active linear throttle assembly comprising a toothed belt. In this example, a toothed belt is arranged to convert determined linear movement into rotary movement. The active linear throttle assembly 600 shown in Figure 7a and 7b comprises a grip 602 which is moveable linearly, a mount 604 to which the grip 604 is attached, a rotary actuator 612, and a connector arranged to connect the rotary actuator 612 to the mount 604. The mount 604 and the grip 602 are moveable together. The mount 604 is attached to the linearly moveable portion, The mount 604 and the grip 602 are moveable along a linear guide 610. Figure 7b illustrates a pair of linear rails 610 as the linear guide 610, but it is appreciated that the linear guide 610 could be any other suitable form of linear guide. The mount 604 may be supported by a linear rail and linear bearings to provide a smooth motion to the pilot. Although a linear guide is shown in Figures 7a and 7b, the linear guide 610 is optional and in addition or as an alternative the mount 604 is mounted onto the linearly moveable portion of timing belt 606.

The connector comprises a rotatable portion connected to the rotary actuator 612, wherein rotational movement of the rotary actuator 612 is coupled to rotational movement of the rotatable portion, and a linearly moveable portion connected to the rotatable portion, wherein rotation of the rotatable portion is coupled to linear movement of the linearly moveable portion, The connector comprises a timing belt 606 and a timing belt sprocket 608. Timing belt 606 may be a toothed timing belt with teeth moulded onto its inner surface. Timing belt 606 may be a cogged belt, a cog belt, or a synchronous belt. Timing belt sprocket 608 is connected to rotary actuator 612. Rotational movement of rotary actuator 612 leads to rotational movement of timing belt sprocket 608. Rotational movement of timing belt sprocket 608 leads to linear movement of a portion of timing belt 606. In some examples there is one timing belt sprocket 608 and in other examples there are two timing belt sprockets.

The portion of timing belt 606 which moves linearly is for example the portion of timing belt between the dashed lines 626 in Figures 7a and 7b. In various examples, mount 604 is constrained to move between a first limiter and a second limiter. In those examples the portion of timing belt 606 which moves linearly may be the portion of timing belt between the first limiter and the second limiter. The rotary actuator 612 is configured to control, via the connector, a position of the grip 602. The rotary actuator 612 is configured to move rotationally in response to a control signal. At least one parameter sensing mechanism 120 is arranged to measure at least one of a parameter data associated with the grip 602.

The parameter data comprises force data depending on the force applied to the grip 602 and position data depending on the position of the grip 602 relative to its default position or its previous position or the length of the linear guide 610.

In the active linear throttle assembly arrangements shown in Figures 4-7, the force/torque detector (which corresponds to the force detector 114 in Figures 1 and 2) is positioned close to the point where the pilot applies force in order to more accurately detect the force applied. The point at which force is applied by the pilot is the grip, which provides a grippable, shaped element (e.g. in the form of a plate or knob) at the distal end of the linearly moveable grip 110. As described above, this force may be detected using a force detector or a torque detector (since the linearly moveable grip 110 is mounted on a platform at its proximal end and the platform supports linear movement of the grip along its length). Each additional link or bearing between the point at which force is applied by the pilot and the point at which the force is sensed introduces errors (e.g. as a consequence of backlash and/or friction of the link or bearing) which reduce the accuracy of the force data provided to the control system 104 and the flight control system 106 and these errors are then accommodated and/or corrected for in the respective control systems.

A controller for the vehicle system is configured to receive parameter data P from a parameter sensing mechanism 120 for a linearly moveable grip 110. The parameter sensing mechanism 120 is independently located from an actuator 112. The controller is configured to determine a linear movement caused by the linearly moveable grip 110 from the received parameter data P. In some embodiments, the controller is configured to transduce the linear movement into a current value and output control data C based on the current value to control the actuator 112. The controller may be configured to determine a linear movement within a linear actuator mechanism of the active linear throttle assembly 108.

The controller may be further configured to predict one or more parameter demands for the active linear throttle assembly. The prediction is based on the parameter data P from the parameter sensing mechanism 120 and one or more haptic feedback parameters of a flight control system 106. The controller is configured to compare the control data C with the one or more parameter demands and determine an error in the active linear throttle assembly 108. Using the determined error, the controller is configured to update the control data C.

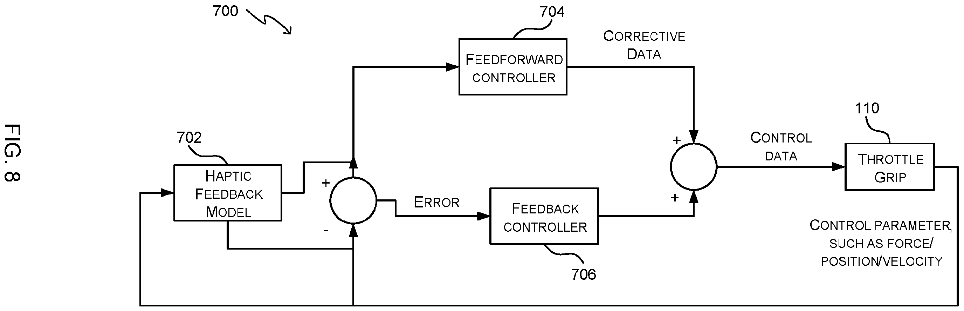

In some embodiment, the controller is configured to predict expected control data based on a haptic feedback model. The haptic feedback model 702 maps the parameter data P from the parameter sensing mechanism 120 and one or more haptic feedback parameters of a flight control system to one or more parameter demands for the active linear throttle assembly 108. The controller is configured to predict expected control data based on the mapping of the parameter data P from the parameter sensing mechanism 120 and one or more haptic feedback parameters of a flight control system 106 to one or more parameter demands for the active linear throttle assembly 108. The controller is configured to compare actual control data with the expected control data; and output corrective data. The output corrective data is based on the compared control data. The controller is configured to use the corrective data to correct the control data C such that the parameters, such as but not limited to position, velocity, force and acceleration, of the active linear throttle assembly 108 are adjusted. The prediction of expected control data can be carried out by separate controllers within the active linear throttle assembly 108. For example, but not limited to a feedforward controller 704 and feedback controller 706 as shown in Figure 8). Figure 8 shows a data flow of the active linear throttle assembly 108 during its operation.

Alternatively, or additionally, the controller is configured to receive parameter data P from a parameter sensing mechanism 120 for a linearly moveable grip 110; predict expected control data based on a haptic feedback model 702; and output control data C based on the expected control data and actual control data to control the actuator 112. The controller may be configured to determine, for the linearly moveable grip 110, one or more parameter demands from the haptic feedback model 702. The haptic feedback model 702 is based on pilot applied force and one or more haptic feedback parameters of a flight control system 106. The controller may be configured to determine the pilot applied force from the received parameter data P.

In some embodiments, the controller is configured to compare the expected control data and the actual control data; and generate corrective data from the compared expected control data and actual control data. The control data is based on the corrective data.

In some embodiments, the controller is configured to predict one or more parameter demands for the active linear throttle assembly based on the parameter data from the parameter sensing mechanism and one or more haptic feedback parameters of a flight control system; determine an error in the active linear throttle assembly by comparing the control data with the one or more parameter demands; and updating the control data.

The controller may be configured to determine a linear movement caused by the linearly moveable grip from the received parameter data; and determine a linear movement within a linear actuator mechanism of the active linear throttle assembly. The controller may be configured to control a linear actuator mechanism, wherein the linear actuator mechanism comprises one of: a mechanical linkage, a linear motor, a toothed belt, a ball screw and/or a lead screw.

Figure 8 shows the active linear throttle assembly comprising separate controllers for feedforward and feedback operations. In some embodiments, a single controller processes feedforward and feedback operations.

The active linear throttle assembly comprises a controller described herein, a parameter sensing mechanism 120 for determining parameter data P for a linearly moveable grip 110, an actuator 112 for driving an engine and a linear actuator mechanism arranged to connect the linearly moveable grip 110 with the actuator 112. The parameter sensing mechanism 120 may comprise one or more of: a position detector, a velocity detector, acceleration detector and/or a force detector. The parameter sensing mechanism 120 may be located according to the need of the design. In some embodiments, the parameter sensing mechanism 120 may be located on the linearly moveable grip 110 or located in a proximity of the linearly moveable grip 110. This provides accurate parameter data P of the force being applied to the grip 110 by the pilot of the vehicle. The mechanical effects such as backlash, friction, dynamic modes or the bending of internal components can corrupt the sensed force and cause errors between what the pilot is really applying and what is measured. Therefore, the nearer the sensor is to the point of force being applied (such as the grip 110) the measurement of the force is less likely to be affected by any corruption. In some embodiments, the parameter sensing mechanism 120 may be located on the linear actuator mechanism and/or located in a proximity of the linear actuator mechanism. The location can be flexible depending on the physical constraint or need of the location of the parameter sensing mechanism. In some embodiments, the parameter sensing mechanism 120 may be located in a proximity of the actuator 112. This provides more accurate parameter data (such as force and position data) being applied to the actuator 112. The actuator 112 may be a rotary motor.

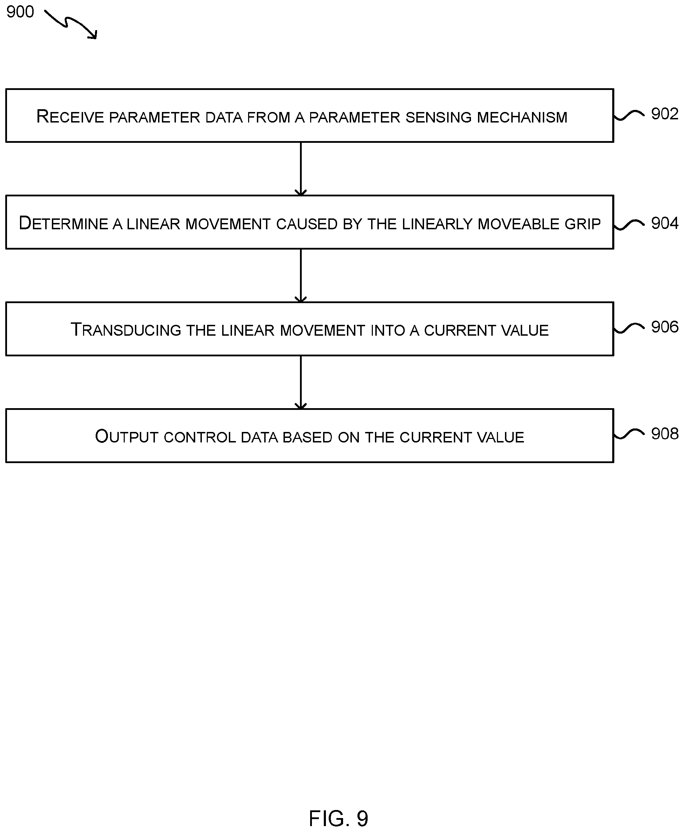

Figure 9 shows an example method 900 of controlling an active linear throttle assembly 108. At step 901 parameter data from a parameter sensing mechanism for a linearly moveable grip are received. The parameter sensing mechanism may comprise one or more detectors (i.e., sensors) such as a position detector 116, a kinematic variable detector (such as but not limited to a velocity detector, an acceleration detector) and a force/torque detector 114.

At step 902, a linear movement caused by the linearly moveable grip is determined from the received parameter data. The received parameter data comprises data from one or more of: a position detector, a velocity detector, acceleration detector and/or a force detector.

In some embodiments, a linear movement within a linear actuator mechanism of the active linear throttle assembly is determined. In some embodiments, the linear actuator mechanism is controlled. The linear actuator mechanism may comprise one of: a mechanical linkage 300, a linear motor 400, a toothed belt 600, a cable drive, a ball screw and/or a lead screw 500. Examples of each type of the linear actuator mechanisms are shown in Figures 4 to 7. These examples show ways to implement the linear actuator mechanism with flexibility in the design of the throttle for the vehicle. For example, depending on the available space within the cockpit of the aircraft, dedicated throw unit can be implemented.

In some embodiments, the parameter data of the linearly moveable grip are received from the parameter sensing mechanism located on the linearly moveable grip. Alternatively, or additionally, the parameter data of the linearly moveable grip are received from the parameter sensing mechanism located in a proximity of the linearly moveable grip. For example, the force/torque detector (which corresponds to the force detector 114 in Figures 1 and 2) may be positioned close to the point where the pilot applies force. This allows more accurate detection of the force applied by the pilot.

Alternatively, or additionally, the parameter data of the linear actuator mechanism from are received from the parameter sensing mechanism located on the linear actuator mechanism. Alternatively, or additionally, the parameter data of the linear actuator mechanism from are received from the parameter sensing mechanism located in a proximity of the linear actuator mechanism. This allows more accurate detection of the parameters (such as but not limited to force, position) in relation to the linear actuator mechanism and provide more accurate data for a feedforward and a feedback loop respectively. The nearer the sensor is to the point of force being applied the measurement of the force is less likely to be affected by any corruption caused by mechanical effects.

Alternatively, or additionally, the parameter data of the actuator are received from the parameter sensing mechanism located in a proximity of the actuator. The actuator may be a rotary motor. This allows more accurate detection of the parameters (such as but not limited to force, position) being applied at the actuator and provide more accurate data for a feedforward and a feedback loop respectively. The nearer the sensor is to the point of force being applied the measurement of the force is less likely to be affected by any corruption caused by mechanical effects.

At step 906, the linear movement is transduced into a current value and control data based on the current value is outputted at step 908. The control data is outputted to control an actuator 112 of the active linear throttle assembly 120. The actuator then controls the engine of the vehicle.

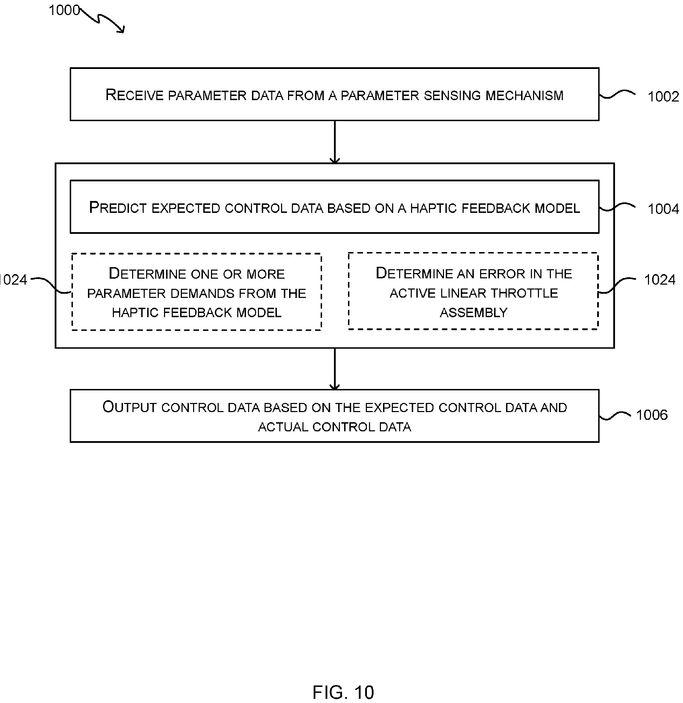

Figure 10 shows an example method 1000 of controlling an active linear throttle assembly 108 with feedback and/or feedback loop.

At step 1002, parameter data from a parameter sensing mechanism for a linearly moveable grip is received. The received parameter data is used to determine the actual control data. The actual control data is determined from the determined linear movement. At step 1004, expected control data based on a haptic feedback model is predicted. The method outputs control data C based on the expected control data and actual control data to control an actuator, at step 1006. The control data C ensures that the parameter, such as velocity, position, acceleration and force match that of the expected control data as stored in the active linear throttle assembly. In some embodiments, step 904 of method 900 and step 1004 of method 1000 may be determined in parallel.

The expected control data is predicted by determining one or more parameter demands from the haptic feedback model at step 1014. For the linearly moveable grip, one or more parameter demands from the haptic feedback model is determined. The haptic feedback model 702 is based on pilot applied force and one or more haptic feedback parameters of a flight control system 106. The haptic feedback model 702 maps the pilot applied force and one or more haptic feedback parameters of the flight control system 106 to one or more parameter demands for the linearly moveable grip. The one or more parameter demands may comprise a position demand, a velocity demand and/or an acceleration demand (from the haptic feedback model). The one or more parameter demands may be based on additional information (such as but not limited to control characteristic data) from the flight control system 106. The pilot applied force may be determined from the received parameter data.

The expected control data and the actual control data are compared; and corrective data from the compared expected control data and actual control data is generated. The control data C is based on the corrective data. The corrective data ensures that the operation of the active linear throttle assembly achieves that of the expected control data. The expected control data may comprise one or more data relevant to force, position, acceleration and velocity of the throttle.

In some embodiments, for the control data C, a motor torque for cancelling the pilot applied force is generated. Alternatively, or additionally, a motor torque constant is estimated; and the control data C based on the estimated motor torque constant is outputted. The received parameter data P and the control data C are stored as a profile.

Alternatively, or additionally, the expected control data may be predicted by determining an error in the active linear throttle assembly is determined at step 1024. One or more parameter demands for the active linear throttle assembly are predicted based on the parameter data from the parameter sensing mechanism and one or more haptic feedback parameters of a flight control system. An error in the active linear throttle assembly may be determined by comparing the control data C with the one or more parameter demands and used to update the control data C. The active linear throttle assembly is provided with a feedback loop to eliminate errors in the system, providing more robust and sophisticated system.

In some embodiments, a linear movement caused by the linearly moveable grip from the received parameter data is determined. A linear movement within a linear actuator mechanism of the active linear throttle assembly is determined. The actual control data is determined from the determined linear movement. The receiving parameter data may comprise receiving parameter data from one or more of: a position detector, a velocity detector and/or a force detector. The parameter data P of the linearly moveable grip 110 is received from the parameter sensing mechanism 120 located on the linearly moveable grip110 and/or located in a proximity of the linearly moveable grip. Alternatively, or additionally, the parameter data P of the linear actuator mechanism is received from the parameter sensing mechanism 120 located on the linear actuator mechanism and/or located in a proximity of the linear actuator mechanism. Alternatively, or additionally, the parameter data P of the actuator 112 is received from the parameter sensing mechanism 120 located in a proximity of the actuator 112.

The linear actuator mechanism is controlled via the controller according to the force applied by the pilot. And the linear actuator mechanism may comprise one of: a mechanical linkage, a linear motor, a toothed belt, a ball screw and/or a lead screw.

The system that implements the method of Figures 9 and 10 (e.g. the control system 104 of Figures 1 and 2) may use a haptic feedback model 702 to generate the control data C that is provided to the active linear throttle assembly 108 to control the actuator 112 and provide haptic feedback to the pilot. The model, which may be referred to as a haptic feedback model 702, defines how the linearly moveable grip 110 should behave and hence may define the soft-stops, gradients, etc. In some embodiments, the model may be associated with each linearly moveable grip 110 and used to generate the control signal C for that linearly moveable grip 110 and this may enable the model to take into consideration factors associated with the particular engine that the linearly moveable grip controls (e.g. where there are differences between engines, e.g. either intentionally as part of the aircraft design or as a result of manufacturing differences).

One or more haptic feedback models 702 that are used may be static or may be dynamic, i.e. they may be updated during use. Where the models are dynamic, the method of Figures 9 and 10 further comprise updating the haptic feedback model 702. In the event of failure of one of the detectors (e.g. the position detector 116 or the force/torque detector 114), the method may switch to only using the data from the remaining working detector.

As described above, the methods of controlling an active linear throttle assembly as shown in Figures 9 and 10 may be implemented in the throw control system 104 in Figure 2 for a multi-throw active throttle assembly. The methods may also be used where an aircraft comprises multiple, linked multi-throw active throttle assemblies, for example in the throw control and linking system 204 in Figure 3.

Figures 9 and 10 show example methods of controlling an active linear throttle assembly. These methods are implemented by one or more controllers. For example, in some embodiments, a feedforward controller 704 and a feedback controller 706 may be separate entities.

The methods of Figures 9 and 10 may be implemented by the (throw) control system 104 shown in Figures 1 and 2. The methods described herein (and shown in Figures 9-10) may be used in combination with any of the plurality of active linear throttle assembly arrangements described herein (e.g. where each active linear throttle assembly 108 in the multi-throw active linear throttle assembly is as described in one of the examples above) or may be used independently (e.g. with any other multi-throw active linear throttle assembly). The methods described herein may also be used where an aircraft comprises multiple, linked multi-throw active linear throttle assemblies, for example in system 200 shown in Figure 3. Multi-throw active linear throttle assemblies are typically used in an aircraft with multiple engines (e.g. 2, 4 or 8 engine aircraft or B52) with each linearly moveable grip in the multi-throw active linear throttle assembly corresponding to (and hence controlling) a different engine. In the multi-throw active linear throttle assembly, the linearly moveable grip may be tracked via a tracking module as a consequence of the control method, results in the sensing of identical positions and forces by the force/torque sensors 114 and position sensors 116 in the active throttle assemblies 108 of the grips that are being tracked and hence the provision of identical position and force data from all grips that are being tracked together to the flight control system 106. The flight control system 106 receives the force and position data from the throw units 102 independently to the throw control system 104.

Referring back to Figure 2, the parameter data P corresponding to a linearly moveable grip 110 in the multi-throw active linear throttle assembly (which may also be referred to as being for the particular linearly moveable grip or from the particular linearly moveable grip) is the position and force data detected by the force and position detector 114, 116 in the same active linear throttle assembly 108 as the particular linearly moveable grip 110.

In the event of failure of one of the detectors of the parameter sensing mechanism (e.g. the position detector or the force/torque detector), the method may switch to only using the data from the remaining working detector (e.g. only the force if the position detector has failed and only the position if the force detector has failed).

Figure 11 is a schematic diagram of a computing device 1100 that is configured to implement the methods for controlling an active linear throttle assembly as shown in Figures 9 and 10 and hence may act as the control system 104 in Figure 1 or the throw control system 104 Figure 2.

The computing device 1100 comprises one or more processors 1102 and a memory 1104 arranged to store executable instructions that are executed by the processor 1102. The memory 1104 is arranged to store a tracking module 1106 that comprises instructions that, when executed by the processor 1102, cause the computing device 1100 to perform the method of Figure 9 or Figure 10. The memory 1104 may also store data that is used and/or updated by the tracking module 1106, such as the linearly moveable grip models 1108. As described above, these models, which may correspond to a single linearly moveable grip or a group of two or more linearly moveable grips, define how the control data C is generated that operates the actuator attached to the linearly moveable grip and provides haptic feedback.

As shown in Figure 11, the computing device 1100 also comprises a plurality of interfaces such as a detector input interface 1112 that is configured to receive the parameter data P, such as but not limited to force data, position data, from a throw unit 102, a control signal output interface 1114 that is configured to output control data C to the throw unit 102 and a flight control interface 1116 that is configured to communicate with a flight control system 106.

In the example shown in Figure 11, the computing device 1100 comprises a flight control interface 1116. In other examples a single computing device may operate as both the flight control system 106 and the control system 104 and, in such examples, the flight control interface may be replaced by one or more interfaces that receive data from other detectors and systems in the aircraft and the memory 1104 may comprise a flight control system module.

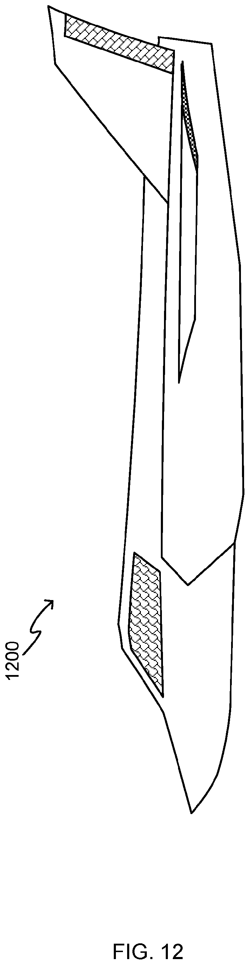

Figure 12 shows a vehicle (i.e., an aircraft) comprising the active linear throttle assembly described herein.

A computer program comprising instructions which, when the program is executed by a computer, cause the computer to carry out any of the methods described herein. The computer program may be stored on a computer-readable medium.

## Claims

1. A method for controlling an active linear throttle assembly, the method comprising:
receiving (1002) parameter data from a parameter sensing mechanism for a linearly moveable grip;
predicting (1004) expected control data based on a haptic feedback model; and
outputting (1006) control data based on the expected control data and actual control data to control an actuator.

2. The method according to claim 1, wherein the predicting the expected control data comprises:
determining (1024), for the linearly moveable grip, one or more parameter demands from the haptic feedback model, wherein the haptic feedback model is based on pilot applied force and one or more haptic feedback parameters of a flight control system.

3. The method according to any one of the preceding claims, comprising:
comparing the expected control data and the actual control data; and
generating corrective data from the compared expected control data and actual control data, wherein the control data is based on the corrective data.

4. The method according to claim 2 or claim 3, comprising:
generating a motor torque for cancelling the pilot applied force.

5. The method according to any one of the preceding claims, comprising:
estimating a motor torque constant; and
outputting the control data based on the estimated motor torque constant.

6. The method according to any one of the preceding claims, comprising:
storing the received parameter data and the control data as a profile.

7. The method according to any one of the preceding claims, comprising:
predicting one or more parameter demands for the active linear throttle assembly based on the parameter data from the parameter sensing mechanism and one or more haptic feedback parameters of a flight control system;
determining (1024) an error in the active linear throttle assembly by comparing the control data with the one or more parameter demands; and
updating the control data.

8. The method according to any one of the preceding claims, comprising:
determining a linear movement caused by the linearly moveable grip from the received parameter data; and
determining a linear movement within a linear actuator mechanism of the active linear throttle assembly.

9. The method according to any one of the preceding claims, wherein receiving parameter data comprises receiving parameter data from one or more of: a position detector, a velocity detector and/or a force detector.

10. The method according to any one of the preceding claims, comprising:
receiving parameter data of the linearly moveable grip from the parameter sensing mechanism located on the linearly moveable grip and/or located in a proximity of the linearly moveable grip.

11. A controller (1102) configured to:
receive parameter data P from a parameter sensing mechanism (120) for a linearly moveable grip (110);
predict expected control data based on a haptic feedback model (702); and
output control data based on the expected control data and actual control data to control the actuator (112).

12. The controller according to claim 11 configured to:
control a linear actuator mechanism, wherein the linear actuator mechanism comprises one of: a mechanical linkage, a linear motor, a toothed belt, a ball screw and/or a lead screw.

13. An active linear throttle assembly comprising:
the controller of claim 11 or 12;
a parameter sensing mechanism for determining parameter data for a linearly moveable grip;
an actuator for driving an engine; and
a linear actuator mechanism arranged to connect the linearly moveable grip with the actuator.

14. The active linear throttle assembly according to claim 13, wherein the parameter sensing mechanism comprises one or more of: a position detector, a velocity detector and/or a force detector.

15. The active linear throttle assembly according to claim 13 or claim 14, wherein the parameter sensing mechanism is located on or located in proximity of: the linearly moveable grip and/or the linear actuator mechanism.
